# EUROPÄISCHE PATENTSCHRIFT

(11) **EP 3 039 503 B1**
(45) Veröffentlichungstag und Bekanntmachung des Hinweises auf die Patenterteilung: **04.11.2020**
(21) Anmeldenummer: 14790492.4
(22) Anmeldetag: 25.08.2014
(51) Int. Cl.: G06F 1/16, H04M 1/04, H04M 1/02

(54) **HALTEVORRICHTUNG FÜR EIN MOBILES KOMMUNIKATIONSGERÄT**
RETAINING DEVICE FOR A MOBILE COMMUNICATION DEVICE
DISPOSITIF SUPPORT POUR APPAREIL DE COMMUNICATION MOBILE

(30) Priorität: 30.08.2013 DE 102013109473
(43) Veröffentlichungstag der Anmeldung: 06.07.2016
(73) Patentinhaber: Viveroo GmbH, 33154 Salzkotten (DE)
(72) Erfinder: PELSTER, Michael, 59581 Warstein (DE); BÜTH, Winfried, 33154 Salzkotten (DE); BÜTH, Jonas, 30161 Hannover (DE); CHRIST, Maximilian, 50825 Köln (DE); KORTING, Sebastian, 33154 Salzkotten (DE); MEYER, Johanna, 30161 Hannover (DE)
(74) Vertreter: Wickord, Wiro
(86) Internationale Anmeldenummer: PCT/DE2014/100301
(87) Internationale Veröffentlichungsnummer: WO 2015/027993

(56) Entgegenhaltungen:
- DE-C1- 10 213 356
- US-A1- 2010 073 857
- US-A1- 2010 085 702
- US-A1- 2012 075 789

## Beschreibung

Die Erfindung betrifft eine Haltevorrichtung für ein mobiles Kommunikationsgerät mit einem Aufnahmemodul nach dem Oberbegriff des Patentanspruchs 1.

In zunehmender Weise hält die Automatisierung Einzug in den Bereich der Haus- und Gebäudetechnik. Während vor einigen Jahren eine dezentrale Verkabelung insbesondere elektrischer Verbraucher üblich war, findet sich heute in Wohngebäuden, in Gewerbegebäuden sowie in öffentlichen Gebäuden eine zunehmend vernetzte Infrastruktur. Als Teil dieser vernetzten Infrastruktur werden zentrale Steuer- und Bedieneinheiten vorgesehen. Über die zentrale Steuer- und Bedieneinheit können umfangreiche Funktionen zentral ausgeführt, überwacht und vorausgeplant werden. Teil der Steuer- und Bedieneinheit ist hierbei üblicherweise ein Display, über welches Informationen und Betriebszustände einzelner Komponenten der Hausinstallation angezeigt werden können. Darüber hinaus erlauben Bedienkomponenten die Interaktion. Beispielsweise können gezielt Betriebszustände abgefragt, Programmroutinen geändert oder einzelne Verbraucher angesprochen und gesteuert werden.

Während derartige Steuer- und Bedieneinheiten heute in der Mehrzahl als Firmenware-Lösung vom Anbieter der Hausinstallation bereitgestellt werden, ist auch hier ein Trend in Richtung offener, multifunktionaler Geräte zu erkennen. Beispielsweise finden in jüngster Vergangenheit mobile Kommunikationsgeräte, beispielsweise handelsübliche Tablet-PCs, Verwendung. Die Interaktion mit dem Installationsnetzwerk und den hierin vorgesehenen Verbrauchern erfolgt dann beispielsweise über nachträglich auf dem mobilen Kommunikationsgerät installierter Softwareprogramme, sogenannte Apps. Sie erlauben eine individuelle Bedienung der Gebäudetechnik und werden beispielsweise vom Hersteller des Installationsnetzwerks bereitgestellt. Um eine sichere und komfortable Bedienung der Gebäudetechnik auch mittels der handelsüblichen Kommunikationsgeräte zu gewährleisten, werden Schnittstellen für das mobile Kommunikationsgerät als Teil der Hausinstallation bereitgestellt. Die Datenkommunikation erfolgt hierbei üblicherweise drahtlos, beispielsweise über WLAN. Zur mechanischen Einbindung des mobilen Kommunikationsgeräts sind mechanische Adapter, sogenannte Dockingstationen, bekannt. Sie sind beispielsweise ortsfest an einer gut zugänglichen Position im Gebäude vorgesehen. Bekannt sind hierbei beispielsweise wandmontierte mechanische Adapter, die unter Putz verbaut werden. Ebenso können die mechanischen Adapter in Schrankwänden, Türen oder sonstige Einbauelementen vorgesehen werden.

Um das mobile Kommunikationsgerät gleichwohl flexibel und mobil nutzen zu können, wird es in den mechanischen Adaptern lediglich temporär festgelegt. Die mechanischen Adapter sind insofern dazu ausgebildet, ein Einsetzen des Kommunikationsgeräts sowie dessen Entnahme zu ermöglichen. So ist aus der US 8,369,082 B2 eine für die Unterputzmontage vorgesehene Haltevorrichtung für ein mobiles Kommunikationsgerät bekannt. Die Haltevorrichtung umfasst ein kastenförmiges Gehäuse und ein schwenkbar an dem Gehäuse festgelegtes Aufnahmemodul für das Kommunikationsgerät. Das Aufnahmemodul kann von einer Betriebsposition, in der es in dem Gehäuse vorgesehen ist und ein in dem Aufnahmemodul festgelegtes Kommunikationsgerät durch eine an dem Gehäuse vorgesehene Öffnung bedient werden kann, in eine Aufnahmeposition verbracht werden. In der Aufnahmeposition ist das Aufnahmemodul abschnittsweise aus dem Gehäuse herausgeschwenkt und erlaubt das Einsetzen des Kommunikationsgeräts. Nach dem Einsetzen kann das Aufnahmemodul in die Betriebsposition zurück verschwenkt werden. Weiter ist aus der DE 10 2011 000 848 A1 eine Haltevorrichtung für ein mobiles Kommunikationsgerät mit einem Aufnahmemodul für das Kommunikationsgerät und einem Rotationsmodul zum Verschwenken des Aufnahmemoduls um eine horizontale Schwenkachse bekannt. Indem das Aufnahmemodul mit dem Rotationsmodul um die Schwenkachse gedreht wird, kann es aus einer ersten Betriebsposition, in der das Display des Kommunikationsgeräts beispielsweise im Hochformat vorgesehen ist, in eine zweite Betriebsposition verbracht werden, in der das Display im Querformat vorgesehen ist. Das Aufnahmemodul selbst ist hierbei einzig um die Schwenkachse des Rotationsmoduls schwenkbar. Ein separates Aufschwenken des Aufnahmemoduls zum Einsetzen des Kommunikationsgeräts ist nicht vorgesehen. Vielmehr sind an dem Aufnahmemodul längsverschiebbare Kippbacken vorgesehen, welche an die Größe unterschiedlicher Kommunikationsgeräte angepasst werden können und ein formschlüssiges Festlegen des Kommunikationsgeräts erlauben.

Weitere Haltevorrichtungen sind in der US 2010/073857 A1, der US 2012/075789 A1 und der DE 102 13 356 C1 beschrieben.

Aufgabe der Erfindung ist es, die Handhabung und Sicherheit einer wandmontierbaren Haltevorrichtung für ein mobiles Kommunikationsgerät weiter zu verbessern, insbesondere einfach zu gestalten und sicherer zu machen.

Zur Lösung der Aufgabe weist die Erfindung die Merkmale des Patentanspruchs 1 auf.

Der besondere Vorteil der Erfindung besteht darin, dass das Einsetzen des Kommunikationsgeräts in das Aufnahmemodul vereinfacht wird. Zugleich sind das Aufnahmemodul und das Rotationsmodul zusammen mit dem in dem Aufnahmemodul eingesetzten Kommunikationsgerät besonders geschützt, da sie sich in der Betriebsposition zumindest abschnittsweise und bevorzugt vollständig in dem Gehäuse befinden. Das Gehäuse kann beispielsweise dazu dienen, eine Unterputzinstallation der Haltevorrichtung zu ermöglichen. Das Aufnahmemodul und das Rotationsmodul werden dann über das Gehäuse in eine Unterputzdose eingeschraubt. Ebenso kann das Gehäuse dazu dienen, die Haltevorrichtung in eine Ausnehmung einer Wandvertäfelung, einer Schrankwand, einer Tür oder dergleichen festzulegen.

Der Grundgedanke der Erfindung besteht darin, eine in einer Wand, einer Wandverkleidung, einem Möbelstück oder einer Tür verbaubare Haltevorrichtung für ein mobiles Kommunikationsgerät bereitzustellen, welche die Bedienung des Kommunikationsgeräts in einer aufrechten beziehungsweise vertikalen ersten Betriebsposition und in einer um 90° hierzu verdrehten zweiten Betriebsposition zu ermöglichen, in der sich das mobile Kommunikationsgerät bevorzugt im Querformat orientiert findet, und bei dem Kommunikationsgerät einfach und sicher in das Aufnahmemodul eingesetzt werden kann. Sowohl in der ersten als auch in der zweiten Betriebsposition soll das Kommunikationsgerät, welches in dem Aufnahmemodul festgelegt wird, geschützt in dem Gehäuse vorgesehen sein. Bevorzugt ist hierbei, dass das Rotationsmodul, das Aufnahmemodul und/oder das in dem Aufnahmemodul gehaltene Kommunikationsgerät in der ersten Betriebsposition und in der zweiten Betriebsposition im Wesentlichen vollständig in dem Gehäuse vorgesehen sind. Zum Einsetzen des Kommunikationsgeräts in das Aufnahmemodul wird dieses aus dem Gehäuse zumindest abschnittsweise herausgeschwenkt. Das Kommunikationsgerät kann dann in einfacher Weise in das Aufnahmemodul eingesetzt werden. Die Aufnahmeposition ist hierbei nicht für die Bedienung des mobilen Kommunikationsgeräts vorgesehen.

Durch das Schwenken des Kommunikationsgeräts aus der ersten Betriebsposition in die zweite Betriebsposition und zurück ist gewährleistet, dass ein Display des Kommunikationsgeräts sowohl im Hochformat als auch im Querformat dargeboten werden kann. Dies ist vorteilhaft, da Softwareanwendungen zur Steuerung und Überwachung von Haustechnik bekannt sind, deren über das Display visualisierte Informationsfunktion sich abhängig von der Orientierung des Displays unterscheidet. So kann es sein, dass bestimmte Informationsgehalte von der Software nur angezeigt werden, wenn sich das Display im Querformat befindet. Die Informationsgehalte werden ausgeblendet, sofern das Display im Hochformat orientiert ist. Die schwenkbare Anordnung des Displays und letztlich des gesamten mobilen Kommunikationsgeräts ist daher Voraussetzung, um die softwareseitig bereitgestellten Funktions- und Informationskomponenten der Gebäudeinstallationsanordnung vollständig zu nutzen.

Nach einer bevorzugten Ausführungsform der Erfindung sind Mittel zum Arretieren des Aufnahmemoduls in der ersten Betriebsposition beziehungsweise in der zweiten Betriebsposition vorgesehen. Vorteilhaft können durch die Arretiermittel die zwei Betriebspositionen dauerhaft eingenommen werden. Die Betriebspositionen können als Vorzugspositionen der Haltevorrichtung ausgebildet sein. Insbesondere kann vorgesehen sein, dass die Arretierung des Aufnahmemoduls in der ersten Betriebsposition oder in der zweiten Betriebsposition gelöst werden muss, bevor das Aufnahmemodul zusammen mit dem Rotationsmodul um die erste Schwenkachse gedreht werden kann. Die Arretierung kann bevorzugt kraftschlüssig oder formschlüssig erfolgen.

Ferner können Mittel zum Blockieren der Schwenkbewegung des Aufnahmemoduls um die zweite Schwenkachse vorgesehen sein. Durch das Vorsehen der Blockiermittel für das Aufnahmemodul kann sichergestellt werden, dass einem unbeabsichtigten beziehungsweise unautorisierten Verbringen des Aufnahmemoduls in die Aufnahmeposition entgegengewirkt ist. Das mobile Kommunikationsgerät, welches nur in der Aufnahmeposition des Aufnahmemoduls in eben dieses eingesetzt werden kann, ist somit in der ersten Betriebsposition und in der zweiten Betriebsposition sicher in dem Aufnahmemodul gehalten. Es kann weder unbeabsichtigt aus dem Aufnahmemodul gelangen, noch kann es unautorisiert entnommen werden. Dies erlaubt die Verwendung der Haltevorrichtung beispielsweise in öffentlichen Gebäuden, Museen, Hotelräumen oder dergleichen.

Insbesondere kann vorgesehen sein, dass das Blockiermittel als Teil einer Schließung vorgesehen ist, die in einer ersten Schließstellung das Verbringen des Aufnahmemoduls in die Aufnahmeposition unabhängig von der Betriebsposition verhindert und eben dies in einer zweiten Schließstellung ermöglicht. Beispielsweise kann vorgesehen sein, dass über die Blockiermittel das Verbringen des Aufnahmemoduls in die Aufnahmeposition verhindert wird, wenn sich das Aufnahmemodul in der zweiten Betriebsposition (Querformat) befindet, während das Aufnahmemodul aus der ersten Betriebsposition in die Aufnahmeposition verschwenkt werden kann. Vorteilhaft wird hierdurch sichergestellt, dass beim Aufschwenken des Aufnahmemoduls das Kommunikationsgerät nicht unbeabsichtigt, beispielsweise aufgrund der Schwerkraft, aus dem Aufnahmemodul gleitet und etwa beim Auftreffen auf dem Boden beschädigt oder zerstört wird. Aus der ersten Betriebsposition kann das Aufnahmemodul in die Aufnahmeposition so verschwenkt werden, dass das Kommunikationsgerät mit dem oberen Rand aus dem Gehäuse geschwenkt wird, während es unten sicher in dem Gehäuse gehalten wird. Das Kommunikationsgerät kann dann beispielsweise nach oben aus dem Aufnahmemodul entnommen werden.

Zum Arretieren des Aufnahmemoduls in der ersten Betriebsposition und/oder in der zweiten Betriebsposition kann insbesondere ein beweglich gehaltenes Sperrelement vorgesehen sein. Das Sperrelement kann beispielsweise an dem Rotationsmodul der Haltevorrichtung vorgesehen sein. In einer Arretierposition des Sperrelements ist die Schwenkbewegung des Aufnahmemoduls um die zweite Schwenkachse blockiert. In einer Freigabeposition des Sperrelements ist eben diese Schwenkbewegung des Aufnahmemoduls freigegeben. Das Sperrelement wirkt hierbei beispielsweise wie eine Sperrklinke.

Zur Betätigung des Sperrelements kann ein mit diesem wirkverbindbares Betätigungselement vorgesehen sein. Das Betätigungselement kann aus einer Grundposition desselben in eine Öffnungsposition verbracht werden. In der Grundposition des Betätigungselements befindet sich das Sperrelement in der Arretierposition. Es kann vorgesehen sein, dass das Betätigungselement in seiner Grundposition mit dem Sperrelement nicht wirkverbunden ist. In der Öffnungsposition wirkt das Betätigungselement auf das Sperrelement derart ein, dass das Sperrelement in seiner Freigabeposition ist und die Schwenkbewegung um die zweite Schwenkachse freigegeben wird.

Das Betätigungselement kann beispielsweise nach Art eines Druckbetätigungselements ausgebildet sein. Das Sperrelement wird dann betätigt, wenn das Betätigungselement durch eine vorzugsweise lineare Druckbetätigung aus der Grundposition in die Öffnungsposition verbracht wird.

An der Haltevorrichtung kann nach einer bevorzugten Ausführungsform wenigstens eine Feder-Dämpfungseinrichtung vorgesehen sein. Mittels der Feder-Dämpfungseinrichtung wird eine sanfte, selbsttätige Schlussstellbewegung beim Ausführen der Drehbewegung um die erste Schwenkachse beziehungsweise um die zweite Schwenkachse realisiert. Ein Federelement der Feder-Dämpfungseinrichtung sorgt hierbei dafür, dass die Schwenkbewegung infolge einer in der Schwenkbewegungsrichtung wirkenden Federkraft kurz vor Erreichen der Zielposition selbsttätig erfolgt. Das Dämpfungselement der Feder-Dämpfungseinrichtung wirkt der Schließbewegung kurz vor dem Erreichen der Zielposition entgegen und ist so dimensioniert, dass der Schwenkvorgang mit einer reduzierten Geschwindigkeit erfolgt. Durch das Vorsehen der Feder-Dämpfungseinrichtung kann zum einen ein hoher Bedienkomfort erreicht werden. Zum anderen ist gewährleistet, dass das mobile Kommunikationsgerät beim Verschwenken des Aufnahmemoduls vor Stößen beziehungsweise hohen Beschleunigungskräften geschützt wird.

Beispielsweise kann eine erste Feder-Dämpfungseinrichtung vorgesehen sein, um das Verbringen des Aufnahmemoduls in die Aufnahmeposition selbsttätig und zugleich sanft zu realisieren. Das Federelement sowie das Dämpfungselement dieser ersten Feder-Dämpfungseinrichtung sind dann vorzugsweise zwischen dem Aufnahmemodul und dem das Aufnahmemodul haltenden Rotationsmodul vorgesehen. Wenigstens eine weitere Feder-Dämpfungseinrichtung kann vorgesehen sein, um die Schwenkbewegung aus der ersten Betriebsposition in die zweite Betriebsposition beziehungsweise umgekehrt sanft und selbsttätig zu gestalten.

Das Gehäuse der Haltevorrichtung ist vorzugsweise wannenförmig ausgebildet mit einer rückseitigen Grundplatte, mit wenigstens einer randseitig von der Grundplatte im Wesentlichen senkrecht abragenden Seitenwand und mit einer von der Seitenwand zumindest abschnittsweise umgebenen und zu einer der Grundplatte gegenüberliegenden Vorderseite gebildeten Öffnung. Insbesondere kann vorgesehen sein, dass das Gehäuse eine kreisförmige Grundform aufweist und an der Seitenwand ein Kragen zum Festlegen der Haltevorrichtung vorgesehen ist. Im Bereich der Grundplatte, der Seitenwand beziehungsweise des Kragens können Bohrungslöcher vorgesehen werden, über die die Haltevorrichtung an einer Unterputzdose, einem Verkleidungskörper beziehungsweise einem Wandelement festgelegt, insbesondere verschraubt wird. Das Gehäuse kann zur Verbesserung seiner Schutz- und Tragfunktion aus einem stabilen Werkstoff, beispielsweise aus Stahl, hergestellt beziehungsweise gegossen sein. Insbesondere im Bereich der Seitenwand des Gehäuses kann eine Kulissenführung vorgesehen sein, über die das Rotationsmodul beziehungsweise eine Feder-Dämpfungseinrichtung beim Verschwenken des Rotationsmoduls um die erste Schwenkachse geführt ist.

Nach der Erfindung ist ein die Öffnung des Gehäuses überdeckender, an dem Rotationsmodul und relativ zu dem Gehäuse um die erste Schwenkachse drehbar gehaltener Verschlusskörper vorgesehen. Der Verschlusskörper weist im Bereich des Aufnahmemoduls eine Ausnehmung auf, die in Größe und Position so bestimmt ist, dass das Display oder ein Bedienelement des Kommunikationsgeräts durch die Ausnehmung wenigstens abschnittsweise zugänglich, betätigbar beziehungsweise einsehbar ist. Der Verschlusskörper hat vorzugsweise eine im Wesentlichen plane, von dem Gehäuse beziehungsweise der Grundplatte abgewandte Außenoberflächenseite. Im montierten Zustand des Kommunikationsgeräts ist eine im Wesentlichen ebene Bedien- beziehungsweise Displayoberseite des Kommunikationsgeräts im Wesentlichen flächenbündig mit der Außenoberflächenseite des Verschlusskörpers oder gegenüber dem in Richtung der Grundplatte des Gehäuses zurückversetzt vorgesehen. Der Verschlusskörper kann hinsichtlich seiner Optik, seiner Haptik beziehungsweise des Werkstoffs aus einem ähnlichen oder gleichen Material hergestellt werden wie ein Display des Kommunikationsgeräts.

Zur Vereinfachung der Rotationsbewegung um die erste Schwenkachse (Verbringen des Aufnahmemoduls aus der ersten Betriebsposition in die zweite Betriebsposition beziehungsweise zurück) kann ein Griff vorgesehen beziehungsweise eine Betätigungsmulde wenigstens temporär ausgebildet sein. Beispielsweise kann das Betätigungselement in eine zwischen der Grundposition und der Öffnungsposition desselben gebildeten Zwischenposition verbracht werden, wobei das Betätigungselement in einer zweiten Ausnehmung des Verschlusskörpers derart vorgesehen ist, dass eine Betätigungsfläche des Betätigungselements in der Grundposition im Wesentlichen flächenbündig mit der Au-βenoberflächenseite des Verschlusskörpers vorgesehen ist und dass die Betätigungsfläche des Betätigungselements in der Zwischenposition in Richtung des Gehäuses zur Außenoberflächenseite zurückversetzt vorgesehen ist. Durch die zurückversetzte Orientierung der Betätigungsfläche in der Zwischenposition wird die Griffmulde temporär gebildet.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Figur 1: eine Aufsicht auf die erfindungsgemäße Haltevorrichtung in einer ersten Betriebsposition,
- Figur 2: eine Aufsicht auf die Haltevorrichtung nach Figur 1 in einer zweiten Betriebsposition,
- Figur 3: eine perspektivische Seitenansicht der Haltevorrichtung nach Figur 1 in der ersten Betriebsposition,
- Figur 4: eine perspektivische Seitenansicht der Haltevorrichtung in einer Aufnahmeposition,
- Figur 5: eine Aufsicht auf die Haltevorrichtung nach Figur 1 ohne Verschlusskörper,
- Figur 6: eine Aufsicht auf die Haltevorrichtung nach Figur 1 ohne Verschlusskörper in der zweiten Betriebsposition,
- Figur 7: einen Teilschnitt durch die Haltevorrichtung nach Figur 1 mit einem Betätigungselement in einer Grundposition,
- Figur 8: den Teilschnitt nach Figur 7 mit dem Betätigungselement in einer Zwischenposition,
- Figur 9: den Teilschnitt nach Figur 7 mit dem Betätigungselement in der Öffnungsposition,
- Figur 10: eine Detaildarstellung der Haltevorrichtung nach Figur 2 mit dem Betätigungselement in der Zwischenposition,
- Figur 11: eine teilperspektivische Ansicht auf die Haltevorrichtung mit dem Betätigungselement in der Zwischenposition,
- Figur 12: eine Schnittdarstellung der Haltevorrichtung in der ersten Betriebsposition,
- Figur 13: eine Schnittdarstellung der Haltevorrichtung mit dem Aufnahmemodul in der Aufnahmeposition,
- Figur 14: eine Teilschnittdarstellung der Haltevorrichtung mit einer Detaildarstellung einer Feder-Dämpfungseinrichtung in der ersten Betriebsposition und
- Figur 15: die Teilschnittdarstellung nach Figur 14 mit der Feder-Dämpfungseinrichtung in der Aufnahmeposition.

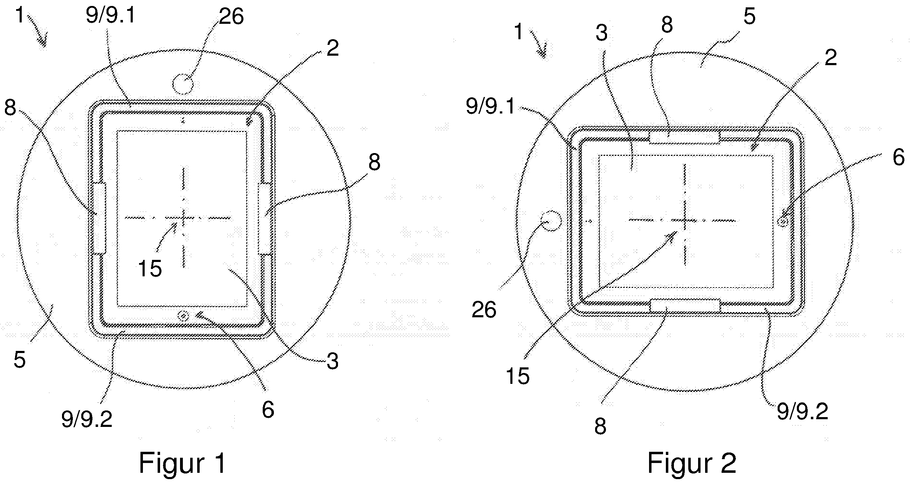

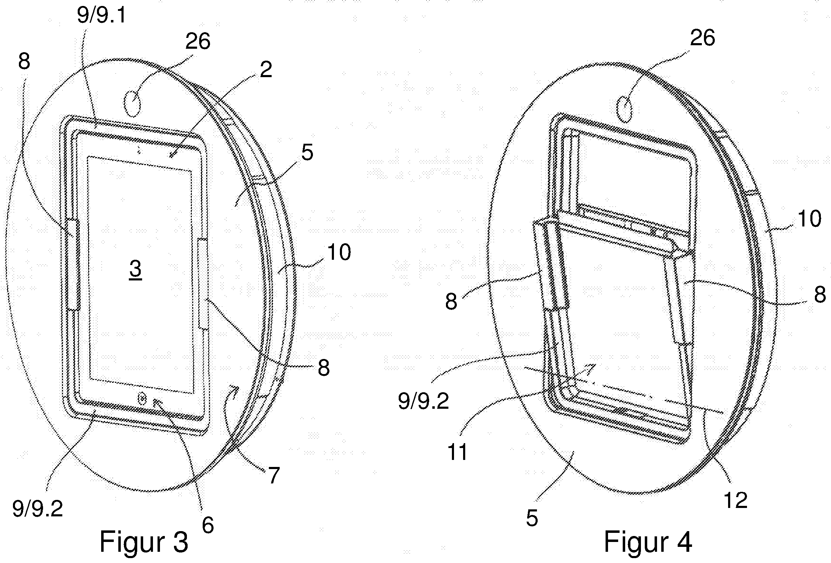

Figur 1 zeigt eine Aufsicht auf eine erfindungsgemäße Haltevorrichtung 1 mit einem hieran festgelegten mobilen Kommunikationsgerät 2 in einer ersten Betriebsposition. Das mobile Kommunikationsgerät 2 umfasst zur Darstellung von Inhalten und zur Visualisierung von Bedienelementen ein im Wesentlichen rechtwinkliges Display 3, welches in der dargestellten ersten Betriebsposition hochformatig vorgesehen ist. Die gleiche Haltevorrichtung 1 mit dem gleichen Kommunikationsgerät 2 ist nach Figur 2 in einer zweiten Betriebsposition dargestellt. Hierbei ist das Kommunikationsgerät 2 um 90° entgegen den Uhrzeigersinn verschwenkt angeordnet, um das Display 3 im Querformat zu nutzen. Eine das Display 3 aufweisende Vorderseite des mobilen Kommunikationsgeräts 2 ist in der Haltevorrichtung 1 in einer Ausnehmung 4 eines Verschlusskörpers 5 der Haltevorrichtung 1 so angeordnet, dass das Display 3 über die Ausnehmung 4 einsehbar und Bedienelemente des Kommunikationsgeräts 2, beispielsweise ein zentraler Steuerknopf 6, oder auf dem Display 3 dargestellte Bedienflächen zugänglich sind. Wie insbesondere aus der perspektivischen Seitenansicht nach Figur 3 deutlich wird, sind eine Außenoberflächenseite 7 des Verschlusskörpers 5 und eine Oberseite des Displays 3 im Wesentlichen parallel angeordnet, wobei die Oberseite des Displays 3 zurückversetzt in Bezug zur Außenoberflächenseite 7 des Verschlusskörpers 5 vorgesehen und dadurch geschützt ist.

Das Kommunikationsgerät 2 ist über seitliche Führungsschienen 8 in der Haltevorrichtung 1 festgelegt. Randseitig wird das mobile Kommunikationsgerät 2 von einem nachgiebigen, insbesondere gummielastischen Körper 9 umgeben. Der gummielastische Körper 9 ist in der Ausnehmung 4 zwischen dem mobilen Kommunikationsgerät 2 einerseits und dem Verschlusskörper 5 andererseits verbaut. Er kann als einteiliger gummielastischer Körper 9 ausgebildet sein oder - wie dargestellt - mehrteilig ausgebildet werden. Vorliegend sind zwei im Wesentlichen U-förmige Profilkörper 9.1, 9.2 realisiert, welche sich stirnseitig beidseits der Führungsschienen 8 anschließen.

Die Haltevorrichtung 1 dient beispielsweise dazu, das für die Steuerung einer Hausinstallation vorgesehene mobile Kommunikationsgerät 2 ortsfest an einer Wand, einem Möbel oder einem anderen Einbaugerät in einem Gebäude zu installieren. Beispielsweise kann die Haltevorrichtung 1 zumindest abschnittsweise verdeckt in einer Ausnehmung der Wand oder des Möbels vorgesehen werden. Insbesondere kann eine Unterputzinstallation vorgesehen werden, wobei die Haltevorrichtung 1 in einer wandmontierten, nicht dargestellten Unterputzdose festgelegt wird. Zu diesem Zweck wird insbesondere ein Gehäuse 10 der Haltevorrichtung 1 mit der Unterputzdose verschraubt. Nach dem Festlegen der Haltevorrichtung 1 kann beispielsweise die Außenoberflächenseite 7 flächenbündig mit der Wand vorgesehen sein. Ebenso ist vorstellbar, dass der dünne Verschlusskörper 5 der Haltevorrichtung 1 erhaben zur Wand vorgesehen wird, während das Gehäuse 10 im Wesentlichen vollständig in der Wand versenkt eingebaut ist.

Zum Einsetzen des Kommunikationsgeräts 2 in die Haltevorrichtung 1 kann ein Aufnahmemodul 11 der Haltevorrichtung 1 in eine Aufnahmeposition verbracht werden, vergleiche Figur 4. Hierbei wird das Aufnahmemodul 11 um eine zweite Schwenkachse 12 zumindest abschnittsweise durch die Ausnehmung 4 herausgeschwenkt, sodass das Kommunikationsgerät 2 von oben in die Führungsschienen 8 eingesetzt beziehungsweise aus diesen entnommen werden kann. Zusätzlich ist in an dem Aufnahmemodul 11 ein elektrischer Kontaktstecker 13 vorgesehen, welcher zur Kontaktierung des Kommunikationsgeräts 2 dient und über den das Kommunikationsgerät 2 insbesondere bestromt wird.

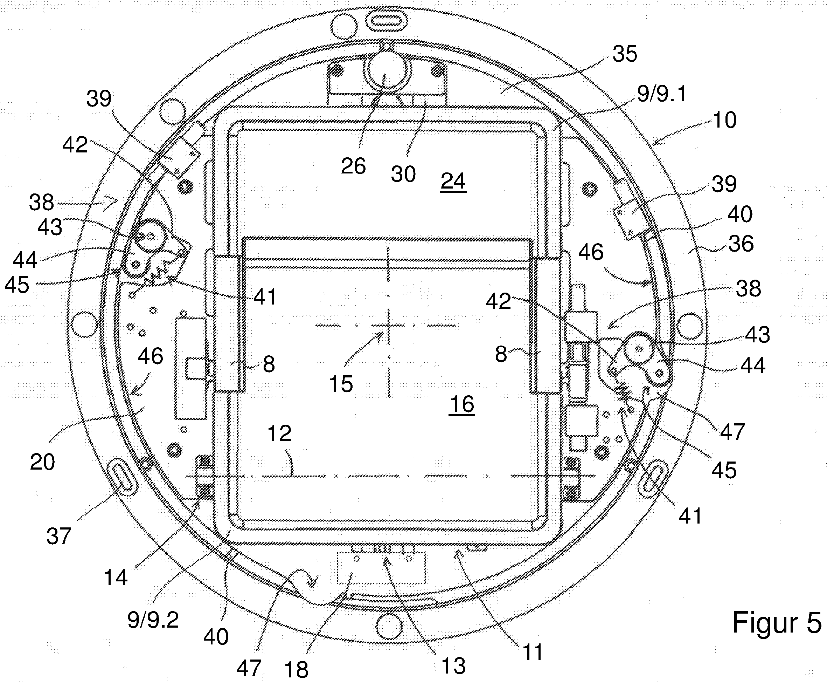

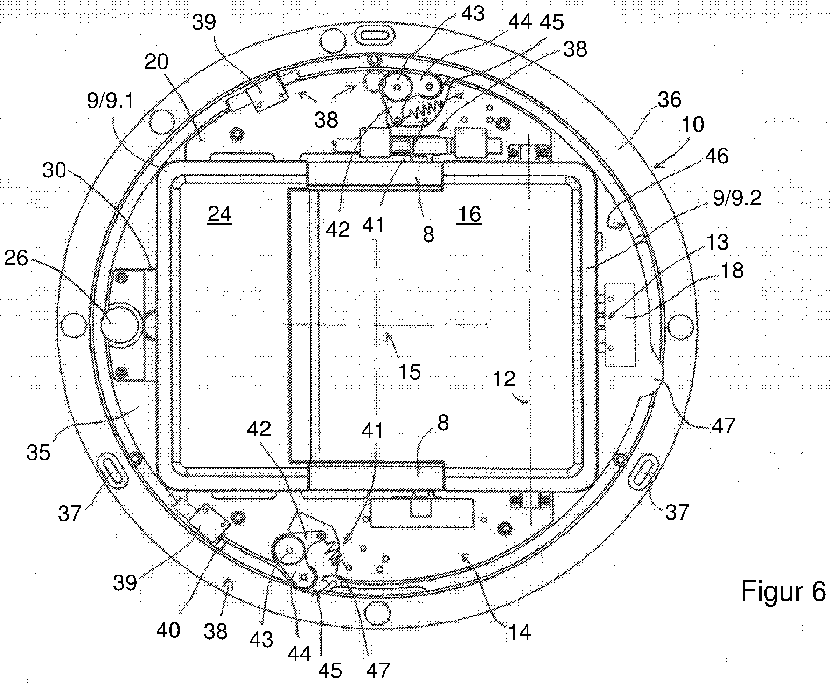

Wie in den Figuren 5 und 6 im Detail dargestellt ist, ist das Aufnahmemodul 11 an einem Rotationsmodul 14 festgelegt. Das Rotationsmodul 14 kann in Bezug zum Gehäuse 10 zusammen mit dem Aufnahmemodul 11 um die erste Schwenkachse 15 gedreht werden zur Verbringung der Haltevorrichtung 1 in die erste Betriebsposition oder in die zweite Betriebsposition. Die erste Schwenkachse 15 ist hierbei im Wesentlichen um 90° geschwenkt zu der zweiten Schwenkachse 12 vorgesehen. Im wandmontierten Zustand der Haltevorrichtung 1 sind beide Achsen 12, 15 vorzugsweise horizontal orientiert.

Das um die zweite Schwenkachse 12 drehbar gehaltene Aufnahmemodul 11 umfasst als wesentliche Komponenten eine rückseitige Trägerplatte 16, die beabstandet an der Trägerplatte 16 festgelegten Führungsschienen 8, den Kontaktstecker 13 sowie einen Halteblock 17 für den Kontaktstecker 13, eine mit dem Kontaktstecker 13 verbundenen Schaltungsträger 18 mit hieran festgelegten Elektronikkomponenten (nicht dargestellt), zwei an gegenüberliegenden Seiten der Trägerplatte 16 vorgesehene Haltedorne 19 sowie den gummielastischen U-förmigen Körper 9.2. Die Haltedorne 19 sind fluchtend zu der zweiten Schwenkachse 12 vorgesehen und dienen zum Abstützen des Aufnahmemoduls 11 an dem Rotationsmodul 14.

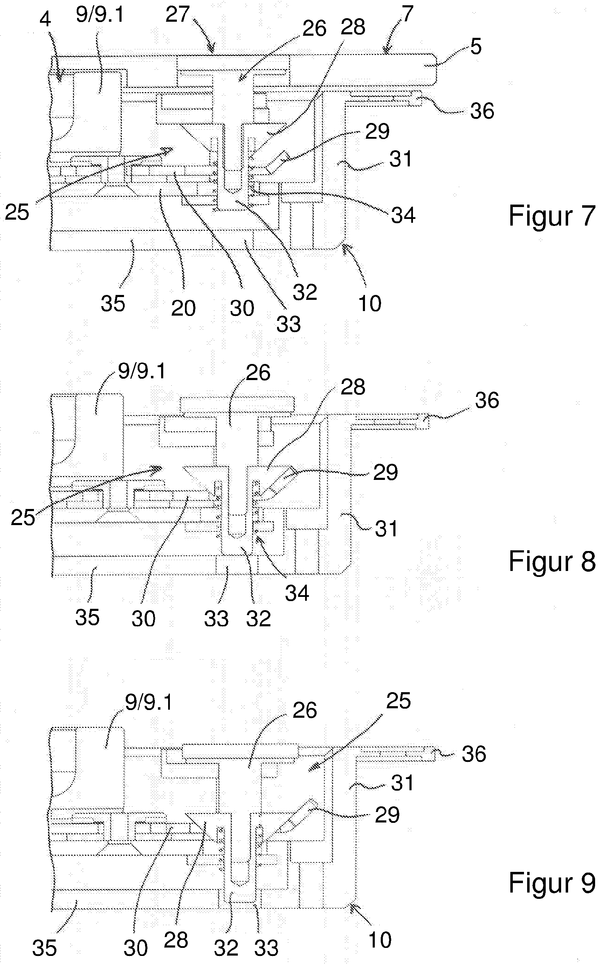

Das Rotationsmodul 14 umfasst als wesentliche Komponenten eine Rotationsplatte 20, zwei hieran festgelegte Halteblöcke 21 zum Aufnehmen der Haltedorne 19 des Aufnahmemoduls 11, lineare Führungskomponenten 22 für einen Schlittenkörper 23 sowie eine Stützplatte 24 für das Kommunikationsgerät 2 und den gummielastischen U-förmigen Körper 9.1. An dem Rotationsmodul 14 ist überdies eine Betätigungseinrichtung 25 vorgesehen, welche detailliert in den Figuren 7 bis 10 dargestellt ist. Die Betätigungseinrichtung 25 umfasst ein Betätigungselement 26, welches nach Art eines Druckbetätigungselements 26 knopfartig ausgebildet ist und eine im Wesentlichen ebene Betätigungsfläche 27 aufweist. Das Betätigungselement 26 kann aus einer in Figur 7 dargestellten Grundposition desselben, in dem die Betätigungsfläche 27 im Wesentlichen flächenbündig mit der Außenoberflächenseite 7 des Verschlusskörpers 5 vorgesehen ist, linear abgesenkt werden. Durch das lineare Absenken gelangt ein konusförmiges Formteil 28 des Betätigungselements 26 in Kontakt mit einem Winkelabschnitt 29 eines längsverschiebbar an der Rotationsplatte 20 des Rotationsmoduls 14 gehaltenen Sperrelements 30. Die so erreichte Stellung des Betätigungselements 26 definiert eine Zwischenposition desselben. Infolge einer weiteren Absenkung des Betätigungselements 26 wird das Sperrelement 30 in Richtung einer Seitenwandung 31 des Gehäuses 10 verschoben. Ein zylindrischer Dorn 32 des Betätigungselements 26 dringt hierbei in eine an dem Gehäuse 10 vorgesehene Freigabeausnehmung 33 ein. Gemäß Figur 9 erreicht das Betätigungselement 26 eine Öffnungsposition. In der Öffnungsposition ist das Sperrelement 30 soweit in Richtung der Seitenwand 31 des Gehäuses 10 verschoben, dass eine Arretierung des Aufnahmemoduls 11 in der ersten Betriebsposition aufgehoben ist und das Aufnahmemodul 11 in die Aufnahmeposition verschwenken kann.

Das Sperrelement 30 wird demzufolge aus einer Arretierposition mittels des Bedienelements in eine Freigabeposition verschoben. Die lineare Stellbewegung des Betätigungselements 26 wird hierbei durch den konusförmigen Formabschnitt 28 und dem Winkelabschnitt 29 in eine um 90° gedrehte Linearbewegung des Sperrelements 30 umgesetzt. Die lineare Bewegung des Sperrelements 30 ist streckenmäßig über den zwischen dem konusförmigen Formabschnitt 28 und dem Winkelabschnitt 29 gebildeten Berührwinkel definiert.

Das Betätigungselement 26 wird mittels einer Rückstellfeder 34 mit Kraft beaufschlagt. Die Rückstellfeder 34 ist so vorgespannt, dass die Grundposition eine Vorzugsstellung des Betätigungselements 26 beschreibt. Sowohl aus der Zwischenposition gemäß Figur 8 als auch aus der Öffnungsposition gemäß Figur 9 gelangt das Betätigungselement 26 federbetätigt selbsttätig zurück in die Grundposition. Überschreitet das Betätigungselement 26 aus der Öffnungsposition kommend die Zwischenposition und wird weiter in Richtung der Grundposition bewegt, gelangt das Sperrelement 30 ebenfalls federkraftbetätigt (Feder nicht dargestellt) aus der Freigabeposition zurück in die Arretierungsposition.

Das Gehäuse 10 der Haltevorrichtung 1 umfasst eine im Wesentlichen flach ausgebildete Grundplatte 35 und die randseitig von der Grundplatte 35 abragende Seitenwand 31. Das Gehäuse 10 erhält hierdurch eine wannenförmige Struktur. Auf einer der Grundplatte 35 gegenüberliegenden Vorderseite des Gehäuses 10 ist eine von der Seitenwand 31 umgebene Öffnung vorgesehen. Im Bereich der Öffnung ragt von der Seitenwand 31 ein umlaufender Kragen 36 radial ab. An dem Kragen 36 ist radial verteilt eine Mehrzahl von Ausnehmungen 37 zur Festlegung des Gehäuses 10 vorgesehen. Weitere Ausnehmungen zur Festlegung des Gehäuses 10 sind im Bereich der Grundplatte 35 beziehungsweise der Seitenwand 31 vorgesehen.

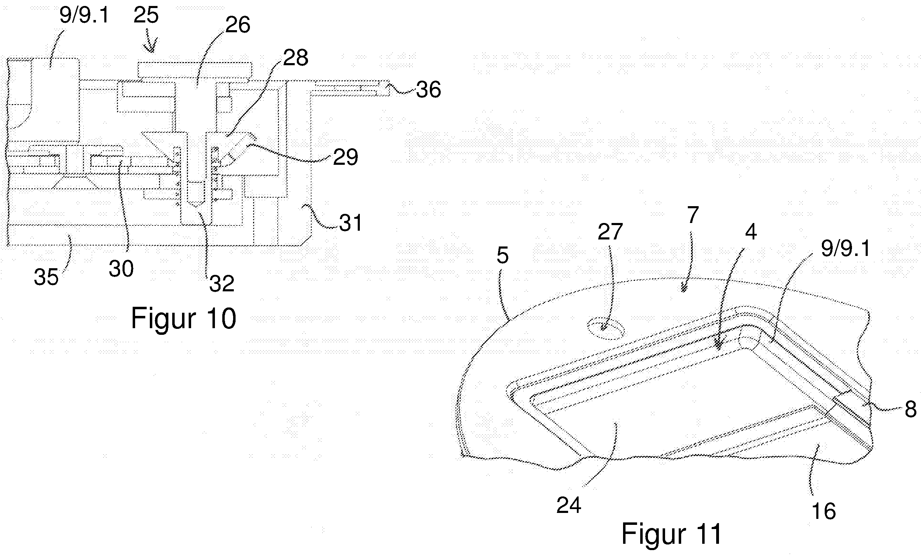

Figur 10 zeigt einen Teilschnitt durch die Haltevorrichtung 1 in deren zweiten Betriebsposition mit dem Betätigungselement 26 in der Zwischenposition. Da in der Grundplatte 35 des Gehäuses 10 die Freigabeausnehmung 33 nicht ausgeführt ist, kann das Betätigungselement 26 nicht über die Zwischenposition hinaus in Richtung der Öffnungsposition verstellt werden. Eine Längsverschiebung des Sperrelements 30 und damit eine Freigabe der Arretierung des Aufnahmemoduls 11 ist unterbunden. Das Aufnahmemodul 11 kann demzufolge aus der zweiten Betriebsposition nicht direkt in die Aufnahmeposition verschwenkt werden.

In Figur 11 ist dargestellt, wie durch das Absenken des Betätigungselements 26 im Bereich desselben eine Griffmulde ausgebildet wird. Durch das Vorsehen der Griffmulde ergibt sich die Möglichkeit, die Haltevorrichtung 1 in einfacher Weise aus der ersten Betriebsposition in die zweite Betriebsposition beziehungsweise aus der zweiten Betriebsposition in die erste Betriebsposition zu verbringen. Einem unbeabsichtigten Verbringen des Betätigungselements 26 in die Öffnungsposition ist dabei in doppelter Weise vorgebeugt. Zum einen verhindert die geschlossene Grundplatte 35 des Gehäuses 10 das Entriegeln des Aufnahmemoduls 11 in der zweiten Betriebsposition ebenso wie beim Verschwenken. Zum anderen ergibt sich durch das Herstellen der Wirkverbindung zwischen dem Betätigungselement 26 und dem Sperrelement 30 in der Zwischenposition auch in der ersten Betriebsposition der Haltevorrichtung 1 infolge der zusätzlich aufzubringenden Betätigungskraft ein Druckpunkt, der das Überschreiten der Zwischenposition für den Benutzer deutlich erkennbar macht. Einer versehentlichen Entriegelung des Aufnahmemoduls 11 ist hierdurch vorgebeugt.

An der Rotationsplatte 20 des Rotationsmoduls 14 sind zwei Feder-Dämpfungseinrichtungen 38 vorgesehen. Die Feder-Dämpfungseinrichtungen 38 dienen dazu, beim Rotieren des Rotationsmoduls 14 und des hieran festgelegten Aufnahmemoduls 11 um die erste Schwenkachse 15 eine sanfte und zugleich selbsttätige Schlussstellbewegung zu realisieren. Ein Dämpfungselement 39 der Feder-Dämpfungseinrichtung 38 dient hierbei der Realisierung einer sanften Bewegung unmittelbar vor Erreichen der ersten Betriebsposition bzw. der zweiten Betriebsposition. Sobald das Dämpfungselement 39 mit einem hierfür vorgesehenen Anschlag 40, welcher an dem Gehäuse 10 vorgesehen ist, in Wirkverbindung tritt, wirkt die Dämpfung der Rotationsbewegung entgegen. Zudem ist ein Federelement 41 vorgesehen. Das Federelement 41 ist an der Rotationsplatte 20 einerseits und einem ersten Schenkel 42 eines L-förmigen Winkelhebels 43 festgelegt. An einem zweiten Schenkel 44 des Winkelhebels 43 ist ein Führungsrad 45 vorgesehen. Mit dem Führungsrad 45 stützt sich die Feder-Dämpfungseinrichtung 38 an einer Kulissenführung 46 ab, welche im Bereich der Seitenwandung 31 des Gehäuses 10 gebildet ist. An der Kulissenführung 46 sind hierbei zwei muldenförmige Ausformungen 47 vorgesehen, welche in Bezug auf das Führungsrad 45 der Feder-Dämpfungseinrichtungen 38 die beiden Betriebspositionen angeben. Gelangt der zweite Schenkel 44 des Winkelhebels 43 in den Wirkbereich der muldenförmigen Ausformungen 47, kann das zugbelastete Federelement 41 entlasten. Infolge der Entlastung des Federelements 41 wird der Rotationskörper selbsttätig die erste Betriebsposition oder die zweite Betriebsposition erreichen.

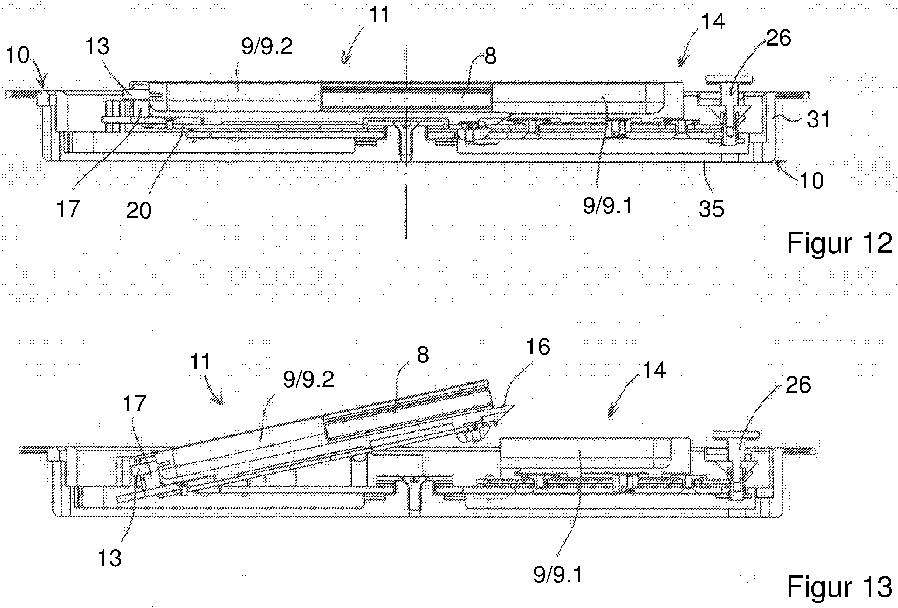

Die Figuren 12 und 13 zeigen eine Schnittdarstellung durch die Haltevorrichtung 1. Während das Aufnahmemodul 11 gemäß Figur 12 in der ersten Betriebsposition im Wesentlichen in dem Gehäuse 10 vorgesehen ist, ist es in der Aufnahmeposition nach Figur 13 um die zweite Schwenkachse 12 gedreht vorgesehen. Das nicht dargestellte Kommunikationsgerät 2 kann in der Aufnahmeposition in das Aufnahmemodul 11 eingeschoben bzw. aus diesem entnommen werden.

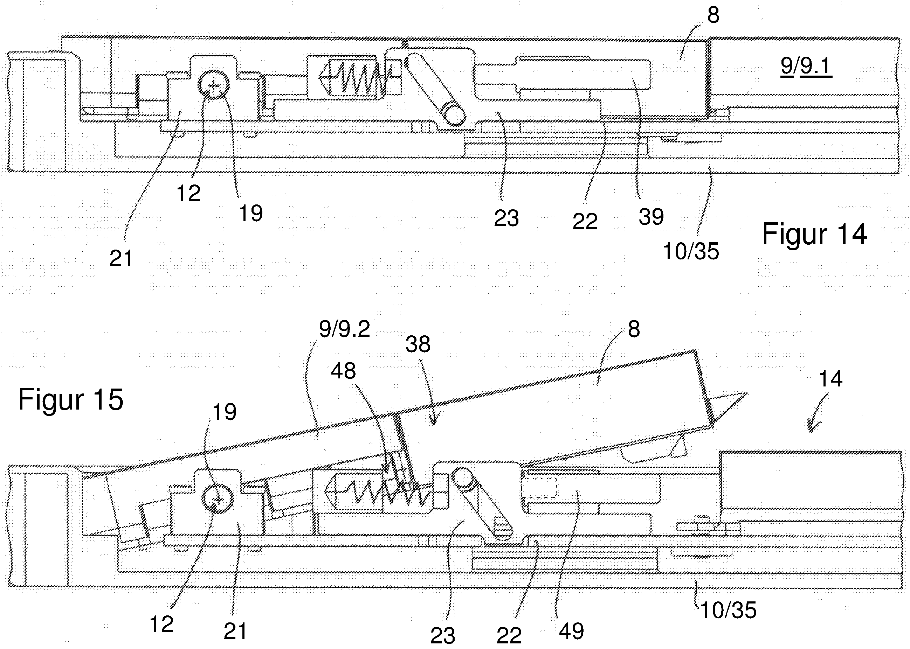

Wie in den Figuren 14 und 15 dargestellt, ist auch zur Realisierung der zweiten Schwenkbewegung um die zweite Schwenkachse 12 eine Feder-Dämpfungseinrichtung 38 vorgesehen. Sobald das Sperrelement 30 in Richtung der Freigabeposition verbracht und die Arretierung des Aufnahmemoduls 11 gelöst ist, entspannt ein Federelement 48. Durch die Entspannung des Federelements 48 verschwenkt das Aufnahmemodul 11 selbsttätig in die Aufnahmeposition. Zusätzlich ist auch hier ein Dämpfungselement 49 vorgesehen, welches vor Erreichen der Aufnahmeposition in Eingriff gebracht wird und eine sanfte Schlussstellbewegung erlaubt.

Da die Haltevorrichtung 1 insbesondere bei einer verdeckten Montage über einen langen Zeitraum Verwendung finden wird und insbesondere aufgrund der vergleichsweise kurzen Nutzungszeiträume moderner Kommunikationsgeräte 2 davon auszugehen ist, dass eine Mehrzahl unterschiedlicher Kommunikationsgeräte 2 über die Lebensdauer der Haltevorrichtung 1 zum Einsatz kommen werden, sind Maßnahmen zur Anpassung der Haltevorrichtung 1 an das jeweilige Kommunikationsgerät 2 getroffen. Insbesondere das Aufnahmemodul 11 ist vollständig modular ausgebildet. Beispielsweise sind die Führungsschienen 8 lösbar an der Trägerplatte 16 festgelegt. Ändern sich beim Austausch des Kommunikationsgeräts 2 die geometrischen Abmessungen bzw. die Konturen, können neue Führungsschienen 8 montiert werden. Beispielsweise kann der Kontaktstecker 13 separat oder zusammen mit dem Halteblock 17 ausgetauscht werden. Korrespondierend hierzu ist auch ein Austausch des Schaltungsträgers 18 vorgesehen. Je nach Änderung der Geometrieverhältnisse können zudem die gummielastischen Körper 9.2 beziehungsweise der Trägerplatte 16 ausgetauscht werden.

Neben dem Aufnahmemodul 11 sind auch anderen Komponenten der Haltevorrichtung 1 austauschbar ausgeführt. Beispielsweise können die Stützplatte 24 und der gummielastische Körper 9.1, der an der Stützplatte 24 vorgesehen ist, ausgetauscht werden zur Anpassung der Haltevorrichtung 1 an die Geometrie des Kommunikationsgeräts 2. Ebenso kann der Verschlusskörper 5 getauscht werden, wenn die Geometrie des neuen Kommunikationsgeräts 2 signifikant von der bisherigen Geometrie abweicht und insofern eine Anpassung der Ausnehmung 4 vorzunehmen ist.

Gleiche Bauteile und Bauteilfunktionen sind durch gleiche Bezugszeichen gekennzeichnet.

## Patentansprüche

1. Haltevorrichtung für ein mobiles Kommunikationsgerät (2) mit einem Aufnahmemodul (11), in das das Kommunikationsgerät (2) einsetzbar ist und an dem Führungsmittel, Stützmittel und/oder Positioniermittel für das Kommunikationsgerät (2) einerseits und Mittel zum elektrischen Kontaktieren des Kommunikationsgeräts (2) andererseits vorgesehen sind, und mit einem Rotationsmodul (14), an dem das Aufnahmemodul (11) gehalten ist, wobei das Aufnahmemodul (11) zusammen mit dem Rotationsmodul (14) um eine erste Schwenkachse (15) aus einer ersten Betriebsposition in eine zweite Betriebsposition und aus der zweiten Betriebsposition in die erste Betriebsposition drehbar vorgesehen ist, wobei ein Gehäuse (10) vorgesehen ist, in dem das Aufnahmemodul (11) und das Rotationsmodul (14) zumindest abschnittsweise vorgesehen sind und an dem das Rotationsmodul (14) gehalten ist, und wobei das Aufnahmemodul (11) durch Drehung desselben um eine zweite Schwenkachse (12) von einer Aufnahmeposition, in der das Kommunikationsgerät (2) in das Aufnahmemodul (11) einsetzbar ist, in die erste Betriebsposition und/oder in die zweite Betriebsposition verbringbar ist, **dadurch gekennzeichnet, dass**
- ein beweglich gehaltenes Sperrelement (30) zum Arretieren des Aufnahmemoduls (11) in der ersten Betriebsposition und/oder in der zweiten Bedienposition vorgesehen ist, wobei in einer Arretierposition des Sperrelements (30) die Schwenkbewegung des Aufnahmemoduls (11) um die zweite Schwenkachse (12) blockiert und in einer Freigabeposition des Sperrelements (30) die Schwenkbewegung des Aufnahmemoduls (11) um die zweite Schwenkachse (12) freigegeben ist,
- ein mit dem Sperrelement (30) wirkverbindbares Betätigungselement (26) vorgesehen ist, welches aus einer Grundposition desselben in eine Öffnungsposition verbringbar ist, wobei die Schwenkbewegung des Aufnahmemoduls (11) um die zweite Schwenkachse (12) in der Grundposition des Betätigungselements (26) blockiert ist und wobei in der Öffnungsposition des Betätigungselements (26) das mit diesem wirkverbundene Sperrelement (30) in der Freigabeposition vorgesehen ist,
- das Gehäuse (10) wannenförmig ausgebildet ist mit einer rückseitigen Grundplatte (35), mit wenigstens einer randseitig von der Grundplatte (35) im Wesentlichen senkrecht abragenden Seitenwand (31) und mit einer von der Seitenwand (31) zumindest abschnittsweise umgebenden und zu einer der Grundplatte (35) gegenüberliegenden Vorderseite gebildeten Öffnung,
- ein die Öffnung des Gehäuses (10) überdeckender, an dem Rotationsmodul (14) festlegbarer und relativ zum Gehäuse (10) um die erste Schwenkachse (15) drehbar gehaltener Verschlusskörper (5) mit einer im Bereich des Aufnahmemoduls (11) vorgesehener Ausnehmung (4)vorgesehen ist, wobei der Verschlusskörper (5) eine im Wesentlichen plane, von dem Gehäuse (10) abgewandte Außenoberflächenseite (7) aufweist und wobei eine relative Position des in dem Gehäuse (10) vorgesehenen Aufnahmemoduls (11) in der ersten Betriebsposition und/oder in der zweiten Betriebsposition zu dem Verschlusskörper (5) und seiner Außenoberflächenseite (7) so bestimmt ist, dass eine ebene Bedien- und/oder Displayoberseite (3) des in dem Aufnahmemodul (11) gehaltenen Kommunikationsgeräts (2) im Wesentlichen parallel und/oder flächenbündig mit der Außenoberflächenseite (7) des Verschlusskörpers (5) vorgesehen ist und/oder zurückversetzt zu der Außenoberflächenseite (7) vorgesehen ist, und wobei das Kommunikationsgerät (2) derart positioniert ist, dass die Bedien- und/oder Displayoberseite (3) desselben im Bereich der Ausnehmung (4) vorgesehen und wenigstens abschnittsweise und bevorzugt vollständig zugänglich und/oder einsehbar ist und
- das Betätigungselement (26) nach Art eines Druckbetätigungselements (26) derart ausgebildet ist, wobei eine Betätigung des Sperrelements (30) durch eine vorzugsweise lineare Druckbetätigung des Betätigungselements (26) bewirkt wird, und/oder dass das Betätigungselement (26) eine ebene oder konvex oder konkav gekrümmte Betätigungsfläche (27) aufweist und in eine zwischen der Grundposition und der Öffnungsposition gebildeten Zwischenposition verbringbar ist, wobei das Betätigungselement (26) in einer zweiten Ausnehmung des Verschlusskörpers (5) derart vorgesehen ist, dass die Betätigungsfläche (27) des Betätigungselements (26) in der Grundposition flächenbündig mit der Außenoberflächenseite (7) des Verschlusskörpers (5) vorgesehen ist und dass die Betätigungsfläche (27) des Betätigungselements (26) in der Zwischenposition in Richtung des Gehäuses (10) zur Außenoberflächenseite (7) zurückversetzt vorgesehen ist, wodurch temporär die Griffmulde gebildet ist.

2. Haltevorrichtung nach Anspruch 1, **dadurch gekennzeichnet, dass** Mittel (Sperrelement 30) zum Arretieren des Aufnahmemoduls (11) in der ersten Betriebsposition und/oder der zweiten Betriebsposition vorgesehen sind und/oder das Mittel (Gehäuse 10) zum Blockieren der Schwenkbewegung des Aufnahmemoduls (11) um die zweite Schwenkachse (12) vorgesehen sind.

3. Haltevorrichtung nach Anspruch 1 oder 2, **dadurch gekennzeichnet, dass** das Gehäuse (10) derart ausgebildet ist und/oder dass die Mittel zum Blockieren der Schwenkbewegung des Aufnahmemoduls (11) um die zweite Schwenkachse (12) derart ausgebildet und/oder positioniert sind, dass die Schwenkbewegung des Aufnahmemoduls (11) um die zweite Schwenkachse (12) in der zweiten Betriebsposition blockiert ist..

4. Haltevorrichtung nach einem der Ansprüche 1 bis 3, **dadurch gekennzeichnet, dass** wenigstens eine Feder-Dämpfungseinrichtung (38) vorgesehen ist zur Realisierung einer selbsttätigen und sanften Schlussstellbewegung beim Ausführen der Drehbewegung um die erste Schwenkachse (15) und/oder um die zweite Schwenkachse (12).

5. Haltevorrichtung nach einem der Ansprüche 1 bis 4, **dadurch gekennzeichnet, dass** eine erste Feder-Dämpfungseinrichtung (38) vorgesehen ist, welche derart mit dem Rotationsmodul (14) und dem Aufnahmemodul (11) in Wirkverbindung steht, dass die erste Feder-Dämpfungseinrichtung (38) zur Realisierung einer selbsttätigen und sanften Schlussstellbewegung beim Verbringen des Aufnahmemoduls (11) in die Aufnahmeposition in Eingriff gebracht wird, und dass wenigstens eine weitere Feder-Dämpfungseinrichtung (38) vorgesehen ist, welche derart mit dem Rotationsmodul (14) einerseits und dem Gehäuse (10) oder einer ortsfest mit dem Gehäuse (10) verbundenen Baueinheit andererseits in Wirkverbindung steht, dass die weitere Feder-Dämpfungseinrichtung (38) zur Realisierung eine selbsttätigen und sanften Schlussstellbewegung beim Verbringen des Rotationsmoduls (14) in die erste Betriebsposition und/oder in die zweite Betriebsposition in Eingriff gebracht wird..

6. Haltevorrichtung nach einem der Ansprüche 1 bis 5, **dadurch gekennzeichnet, dass** an dem Gehäuse (10) eine Kulissenführung (46) vorgesehen ist, über die das Rotationsmodul (14) und/oder die weitere Feder-Dämpfungseinrichtung (38) beim Verschwenken des Rotationsmoduls (14) und des Aufnahmemoduls (11) um die erste Schwenkachse (15) geführt ist.

7. Haltevorrichtung nach Anspruch 6, **dadurch gekennzeichnet, dass** die Kulissenführung (46) an der Seitenwand (31) des Gehäuses (10) und/oder an einer Innenseite der Seitenwand (31) vorgesehen ist.

8. Haltevorrichtung nach einem der Ansprüche 1 bis 7, **dadurch gekennzeichnet, dass** die erste Schwenkachse (15) um 90° winkelversetzt zu der zweiten Schwenkachse (12) vorgesehen ist.

9. Haltevorrichtung nach einem der Ansprüche 1 bis 8, **dadurch gekennzeichnet, dass** zum Durchführen der Rotationsbewegung um die erste Schwenkachse (15) ein Griff vorgesehen und/oder eine Betätigungsmulde wenigstens temporär ausgebildet ist.

10. Haltevorrichtung nach einem der Ansprüche 1 bis 9, **dadurch gekennzeichnet, dass** an der Grundplatte (35) des Gehäuses (10) eine Freigabeausnehmung vorgesehen ist derart, dass das Betätigungselement (26) in der Öffnungsposition desselben zumindest abschnittsweise in die Freigabeausnehmung des Gehäuses (10) eingreift, sofern das Rotationsmodul (14) und das hieran festgelegte Aufnahmemodul (11) in der ersten Betriebsposition vorgesehen sind.

## Claims

1. Retaining device for a mobile communication device (2) comprising a receiving module (11), into which the communication device (2) can be inserted and on which guide means, support means and/or positioning means for the communication device (2) on the one hand and means for electrically contacting the communication device (2) on the other hand are provided, and comprising a rotation module (14), on which the receiving module (11) is retained, the receiving module (11) being provided so as to be rotatable together with the rotation module (14) about a first pivot axis (15) from a first operating position into a second operating position and from the second operating position into the first operating position, a housing (10) being provided, in which the receiving module (11) and the rotation module (11) are provided at least in portions and on which the rotation module (14) is retained, and it being possible to bring the receiving module (11) from a receiving position, in which the communication device (2) can be inserted into the receiving module (11), into the first operating position and/or into the second operating position by rotating it about a second pivot axis (12), **characterised in that**
- a movably retained blocking element (30) is provided for arresting the receiving module (11) in the first operating position and/or in the second operating position, the pivot movement of the receiving module (11) about the second pivot axis (12) being blocked in an arresting position of the blocking element (30) and the pivot movement of the receiving module (11) about the second pivot axis (12) being released in a release position of the blocking element (30),
- an actuation element (26) being provided, which can be operatively connected to the blocking element (30) and which can be brought from a base position thereof into an opening position, the pivot movement of the receiving module (11) about the second pivot axis (12) being blocked in the base position of the actuation element (26) and, in the opening position of the actuation element (26), the blocking element (30) which is operatively connected thereto being provided in the release position,
- the housing (10) being formed trough-shaped with a rear-face base plate (35), with at least one side wall (31) which protrudes substantially perpendicularly from the base plate (35) at the edge, and with an opening which is enclosed at least in portions by the side wall (31) and which is formed facing a front face opposite the base plate (35),
- a locking body (5), which covers the opening of the housing (10) and can be fixed on the rotation module (14) and retained so as to be rotatable about the first pivot axis (15) relative to the housing (10), is provided with a recess (4) provided in the region of the receiving module (11), the locking body (5) having a substantially planar outer surface face (7) facing away from the housing (10), and a position of the receiving module (11) provided in the housing (10) relative to the locking body (5) and the outer surface face (7) thereof in the first operating position and/or in the second operating position being determined in such a way that a flat upper operating and/or display face (3) of the communication device (2) retained in the receiving module (11) is provided substantially parallel to and/or flush with the outer surface face (7) of the locking body (5) and/or is offset back from the outer surface face (7), and the communication device (2) being positioned in such a way that the upper operating and/or display face (3) thereof is provided in the region of the recess (4) and can be accessed and/or looked into at least in portions and preferably in whole, and
- the actuation element (26) being formed in the manner of a pressure actuation element (26), in such a way that the blocking element (30) is actuated by a preferably linear pressure actuation of the actuation element (26) and/or that the actuation element (26) has a flat or convexly or concavely curved actuation area (27) and can be brought into an intermediate position formed between the base position and the opening position, the actuation element (26) being provided in a second recess of the locking body (5) in such a way that the actuation area (27) of the actuation element (26) is provided flush with the outer surface face (7) of the locking body (5) in the base position and that the actuation area (27) of the actuation element (26) is formed offset back towards the housing (10) with respect to the outer surface face (7) in the intermediate position, temporary forming the recessed grip.

2. Retaining device according to claim 1, **characterised in that** means (blocking element 30) for arresting the receiving module (11) in the first operating position and/or the second operating position are provided and/or **in that** means (housing 10) for blocking the pivot movement of the receiving module (11) about the second pivot axis (12) are provided.

3. Retaining device according to either claim 1 or claim 2, **characterised in that** the housing (10) is formed in such a way and/or **in that** the means for blocking the pivot movement of the receiving module (11) about the second pivot axis (12) are formed and/or positioned in such a way that the pivot movement of the receiving module (11) about the second pivot axis (12) is blocked in the second operating position.

4. Retaining device according to any of claims 1 to 3, **characterised in that** at least one spring damping device (38) is provided for implementing an automatic, gentle finishing movement when the rotation movement about the first pivot axis (15) and/or about the second pivot axis (12) is performed.

5. Retaining device according to any of claims 1 to 4, **characterised in that** a first spring damping device (38) is provided, which is operatively connected to the rotation module (14) and the receiving module (11) in such a way that the first spring damping device (38) is engaged so as to implement an automatic, gentle finishing movement when the receiving module (11) is brought into the receiving position, and **in that** at least one further spring damping device (38) is provided, which is operatively connected to the rotation module (14) on the one hand and the housing (10) or a construction unit fixedly connected to the housing (10) on the other hand in such a way that the further spring damping device (38) is engaged so as to implement an automatic, gentle finishing movement when the rotation module (14) is brought into the first operating position and/or into the second operating position.

6. Retaining device according to any of claims 1 to 5, **characterised in that** a slide guide (46), by way of which the rotation module (14) and/or the further spring damping movement (38) are guided when the rotation module (14) and the receiving module (11) are pivoted about the first pivot axis (15), is provided on the housing (10).

7. Retaining device according to claim 6, **characterised in that** the slide guide (46) is provided on the side wall (31) of the housing (10) and/or on an internal face of the side wall (31).

8. Retaining device according to any of claims 1 to 7, **characterised in that** the first pivot axis (15) is provided angularly offset through 90° with respect to the second pivot axis (12).

9. Retaining device according to any of claims 1 to 8, **characterised in that**, for carrying out the rotation movement about the first pivot axis (15), a grip is provided and/or an actuation recess is at least temporarily formed.

10. Retaining device according to any of claims 1 to 9, **characterised in that** a release recess is provided on the base plate (35) of the housing (10) in such a way that the actuation element (26), in the opening position thereof, engages at least in portions in the release recess of the housing (10) as long as the rotation module (14) and the receiving module (11) fastened thereto are provided in the first operating position.

## Revendications

1. Dispositif de maintien pour un appareil de communication mobile (2) comportant un module de logement (11), à l'intérieur duquel l'appareil de communication (2) est insérable et sur lequel sont prévus des moyens de guidage, des moyens de support et/ou des moyens de positionnement pour l'appareil de communication (2) d'un côté et des moyens de contact électrique avec l'appareil de communication (2) de l'autre côté, et comportant un module de rotation (14) sur lequel est maintenu le module de logement (11), dans lequel le module de logement (11) est prévu avec le module de rotation (14) en rotation autour d'un premier axe de pivot (15) depuis une première position opérationnelle vers une deuxième position opérationnelle et depuis la deuxième position opérationnelle vers la première position opérationnelle, dans lequel un boîtier (10) est prévu, le module de logement (11) et le module de rotation (14) étant prévus au moins par sections dans celui-ci et le module de rotation (14) étant maintenu sur celui-ci, et dans lequel le module de logement (11) peut être déplacé, par rotation du même autour d'un deuxième axe de pivot (12), depuis une position de logement, où l'appareil de communication (2) est insérable dans le module de logement (11), vers la première position opérationnelle et/ou vers la deuxième position opérationnelle, **caractérisé en ce que**
- un élément de verrouillage (30) maintenu de manière mobile est prévu afin de bloquer le module de logement (11) dans la première position opérationnelle et/ou dans la deuxième position opérationnelle, dans lequel le mouvement de pivot du module de logement (11) autour du deuxième axe de pivot (12) est empêché dans une position de blocage de l'élément de verrouillage (30) et le mouvement de pivot du module de logement (11) autour du deuxième axe de pivot (12) est débloqué dans une position de déblocage de l'élément de verrouillage (30),
- un élément d'actionnement (26) pouvant être relié de manière opérante à l'élément de verrouillage (30) est prévu, lequel peut être déplacé depuis une position de base vers une position d'ouverture, dans lequel le mouvement de pivot du module de logement (11) autour du deuxième axe de pivot (12) est empêché dans la position de base de l'élément d'actionnement (26) et dans lequel, dans la position d'ouverture de l'élément d'actionnement (26), l'élément de verrouillage (30) relié de manière opérante à celui-ci est prévu dans la position de déblocage,
- le boîtier (10) est réalisé en forme de cuvette avec une plaque de base (35) côté arrière, avec au moins une paroi latérale (31) dépassant côté bords de la plaque de base (35) de manière sensiblement verticale et avec une ouverture entourée au moins par sections par la paroi latérale (31) et formée vers une face avant opposée à la plaque de base (35),
- un corps de fermeture (5) recouvrant l'ouverture du boîtier (10), pouvant être fixé au module de rotation (14) et maintenu en rotation autour du premier axe de pivot (15) par rapport au boîtier (10), est prévu avec un évidement (4) prévu dans la zone du module de logement (11), dans lequel le corps de fermeture (5) comporte un côté de surface externe (7) sensiblement plan et se détournant du boîtier (10) et dans lequel une position relative du module de logement (11) prévu dans le boîtier (10) dans la première position opérationnelle et/ou dans la deuxième position opérationnelle par rapport au corps de fermeture (5) et à son côté de surface externe (7) est déterminée de sorte qu'un côté plat de commande et/ou d'affichage (3) de l'appareil de communication (2) maintenu dans le module de logement (11) est prévu comme sensiblement parallèle et/ou en affleurement avec le côté de surface externe (7) du corps de fermeture (5) et/ou est prévu en retrait par rapport au côté de surface externe (7), et dans lequel l'appareil de communication (2) est positionné de sorte que le côté de commande et/ou d'affichage (3) du même est prévu dans la zone de l'évidement (4) et est accessible et/ou visible au moins par sections et de préférence entièrement et
- l'élément d'actionnement (26) est réalisé selon le type d'un élément d'actionnement par pression (26) de telle sorte qu'un actionnement de l'élément de verrouillage (30) est opéré par un actionnement par pression de l'élément d'actionnement (26), de préférence linéaire, et/ou **en ce que** l'élément d'actionnement (26) comporte une surface d'actionnement (27) plate ou courbée de manière convexe ou concave et peut être déplacé dans une position intermédiaire formée entre la position de base et la position d'ouverture, dans lequel l'élément d'actionnement (26) est prévu dans un deuxième évidement du corps de fermeture (5) de telle sorte que la surface d'actionnement (27) de l'élément d'actionnement (26) est prévue dans la position de base en affleurement avec le côté de surface externe (7) du corps de fermeture (5) et que la surface d'actionnement (27) de l'élément d'actionnement (26) est prévue dans la position intermédiaire en retrait par rapport au côté de surface externe (7) dans la direction du boîtier (10), la cavité de prise étant ainsi temporairement formée.

2. Dispositif de maintien selon la revendication 1, **caractérisé en ce que** des moyens (élément de verrouillage 30) sont prévus afin de bloquer le module de logement (11) dans la première position opérationnelle et/ou dans la deuxième position opérationnelle et/ou **en ce que** des moyens (boîtier 10) sont prévus afin de bloquer le mouvement de pivot du module de logement (11) autour du deuxième axe de pivot (12).

3. Dispositif de maintien selon la revendication 1 ou 2, **caractérisé en ce que** le boîtier (10) est réalisé de telle sorte et/ou **en ce que** les moyens destinés à bloquer le mouvement de pivot du module de logement (11) autour du deuxième axe de pivot (12) sont réalisés et/ou positionnés de telle sorte que le mouvement de pivot du module de logement (11) autour du deuxième axe de pivot (12) est empêché dans la deuxième position opérationnelle.

4. Dispositif de maintien selon l'une des revendications 1 à 3, **caractérisé en ce qu'**au moins un arrangement amortisseur à ressort (38) est prévu afin de réaliser un mouvement de réglage final automatique et en douceur lors de l'exécution du mouvement de rotation autour du premier axe de pivot (15) et/ou autour du deuxième axe de pivot (12).

5. Dispositif de maintien selon l'une des revendications 1 à 4, **caractérisé en ce qu'**un premier arrangement amortisseur à ressort (38) est prévu, lequel est relié de manière opérante au module de rotation (14) et au module de logement (11) de telle sorte que le premier arrangement amortisseur à ressort (38) est mis en prise afin de réaliser un mouvement de réglage final automatique et en douceur lors du déplacement du module de logement (11) dans la position de logement, et **en ce qu'**au moins un arrangement amortisseur à ressort supplémentaire (38) est prévu, lequel est relié de manière opérante au module de rotation (14) d'un côté et au boîtier (10) ou à un assemblage relié de manière immobile au boîtier (10) de l'autre côté de telle sorte que l'arrangement amortisseur à ressort supplémentaire (38) est mis en prise afin de réaliser un mouvement de réglage final automatique et en douceur lors du déplacement du module de rotation (14) dans la première position opérationnelle et/ou dans la deuxième position opérationnelle.

6. Dispositif de maintien selon l'une des revendications 1 à 5, **caractérisé en ce qu'**un guidage à coulisse (46) est prévu sur le boîtier (46), par le biais duquel le module de rotation (14) et/ou l'arrangement amortisseur à ressort supplémentaire (38) est guidé lors du pivotement du module de rotation (14) et du module de logement (11) autour du premier axe de pivot (15).

7. Dispositif de maintien selon la revendication 6, **caractérisé en ce que** le guidage à coulisse (46) est prévu sur la paroi latérale (31) du boîtier (10) et/ou sur une face interne de la paroi latérale (31).

8. Dispositif de maintien selon l'une des revendications 1 à 7, **caractérisé en ce que** le première axe de pivot (15) est prévu avec un décalage angulaire de 90° par rapport au deuxième axe de pivot (12).

9. Dispositif de maintien selon l'une des revendications 1 à 8, **caractérisé en ce qu'**une prise est prévue et/ou une cavité d'actionnement est réalisée de manière temporaire afin de mettre en œuvre le mouvement de rotation autour du premier axe de pivot (15).

10. Dispositif de maintien selon l'une des revendications 1 à 9, **caractérisé en ce qu'**un évidement de déblocage est prévu sur la plaque de base (35) du boîtier (10) de telle sorte que l'élément d'actionnement (26) dans la position d'ouverture du même entre en prise au moins par sections dans l'évidement de déblocage du boîtier (10), pour autant que le module de rotation (14) et le module de logement (11) fixé à celui-ci sont prévus dans la première position opérationnelle.
